# EUROPÄISCHE PATENTSCHRIFT

(11) **EP 0 443 405 B1**
(45) Veröffentlichungstag und Bekanntmachung des Hinweises auf die Patenterteilung: **31.08.1994**
(21) Anmeldenummer: 91101909.9
(22) Anmeldetag: 12.02.1991
(51) Int. Cl.: A01N 55/00

(54) **Konzentrierte wässrige Emulsionen von Neophanen und Azaneophanen zur Anwendung im Pflanzenschutz**
Concentrated aqueous emulsions of neophanes and azaneophanes for use in protection of plants
Emulsions concentrées aqueuses de néophanes et azanéophanes pour l'utilisation à la protection des plantes

(30) Priorität: 17.02.1990 DE 4005155
(43) Veröffentlichungstag der Anmeldung: 28.08.1991
(73) Patentinhaber: Hoechst Schering AgrEvo GmbH, 13342 Berlin (DE)
(72) Erfinder: Röchling, Hans, Dr., W-6232 Bad Soden im Taunus (DE)

(56) Entgegenhaltungen:
- EP-A- 0 202 893
- EP-A- 0 224 024
- EP-A- 0 249 015
- EP-A- 0 296 857
- EP-A- 0 336 199
- DE-A- 3 604 781
- US-A- 4 804 653

## Beschreibung

Gegenstand der vorliegenden Erfindung sind konzentrierte Wäßrige Emulsionen von Verbindungen der Formel I 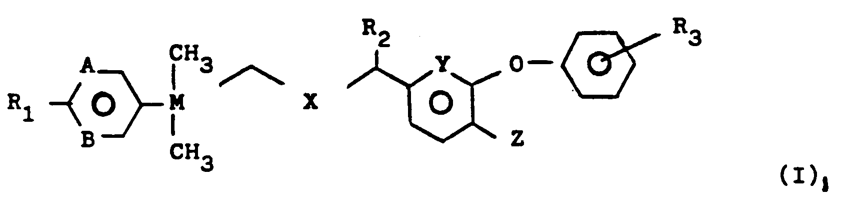
worin
- A, B =: unabhängig voneinander CH, CR₄, N
- X =: CH₂, O, S,
- Y =: CH, N,
- Z =: H, F,
- R₁, R₄ =: unabhängig voneinander H, Halogen, (C₁-C₃)-Alkyl, (C₁-C₃)-Halogenalkyl, (C₁-C₃)-Alkoxy, (C₁-C₃)-Halogenalkoxy, (C₁-C₄)-Alkylthio, (C₁-C₄)-Halogenalkylthio oder R₁ und R₄ zusammen = -CH₂-O-CH₂- ;
- R₂ =: H, (C₁-C₃)-Alkyl, Ethinyl, Vinyl, Halogen, Cyano,
- R₃ =: H, Halogen, (C₁-C₄)-Alkyl, (C₁-C₃)-Alkoxy und
- M =: C oder Si bedeuten, dadurch gekennzeichnet, daß diese eine Kombination aus einem anionaktiven Emulgator, einem n-Butanol-Propylenoxid-Ethylenoxid-Blockoxalkylat und einem Natrium-Magnesium-(und/oder Aluminium)-Silikat mit Schichtstruktur enthalten.

Alkyl steht für einen geradkettigen oder verzweigten Alkylrest.

Bevorzugt bedeuten A, B = CH oder N, X = CH₂, R₁ = (C₁-C₃)-Alkoxy, R₂ = H, R₃ = H oder F und M = Si.

Insbesondere bevorzugt unter den Verbindungen der Formel I ist diejenige, bei der M = Si, R₁ = Ethoxy, A, B = CH, X = CH₂, R₂ = H, Y = CH, Z = F und R₃ = H bedeuten (Ia).

Wirkstoffe aus der Gruppe der Neophane und Azaneophane (I) eignen sich bei guter Pflanzenverträglichkeit und günstiger Warmblütertoxizität zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam (EP-A 0 224 024, EP-A 0 249 015, EP-A 0 288 810). In diesen Dokumenten sind auch die üblichen Formulierungstypen für Insektizide oder Akarizide beschrieben.

Neophane und Azaneophane der Formel I besitzen neben einer breiten insektiziden Wirksamkeit eine ungewöhnlich günstige Warmblütertoxizität sowie eine sehr geringe Toxizität gegen Fische und Vögel. Diese positiven Wirkstoffeigenschaften sollten durch eine entsprechende Formulierung unterstützt werden. Es lag zunächst nahe, die als ölige und gut lösliche Flüssigkeiten vorliegenden Verbindungen I, als emulgierbare Konzentrate (EC) zu formulieren.

Bei der Herstellung eines emulgierbaren Konzentrates müssen jedoch Lösungsmittel verwendet werden, deren Einsatz eine Reihe von Nachteilen mit sich bringt. Konzentrierte wäßrige Emulsionen hingegen, die ohne Lösungsmittel hergestellt werden können, haben folgende Vorteile gegenüber einem EC:
- hohen, bzw. keinen Flammpunkt, daher sicherer bei Transport und Lagerung;
- größere Sicherheit für den Anwender, da geringere dermale und Schleimhaut-Toxizität;
- größere Umweltfreundlichkeit, geringere bzw. keine Geruchsbelästigung.

Es bestand daher die Aufgabe, konzentrierte wäßrige Emulsionen von Neophanen und Azaneophanen (I) zu entwickeln, die eine ausreichende Lagerstabilität, gute Gießfähigkeit sowie gute anwendungstechnische Eigenschaften aufweisen.

Die Herstellung von konzentrierten wäßrigen Emulsionen (EW) ist prinzipiell beschrieben in DE-OS 30 09 944, DE-OS 32 35 612, EP-A 0 107 023, EP-A 0 160 182 und EP-A 0 297 207. Die in diesen Schriften beschriebenen Verfahren sind jedoch für die hier zu formulierenden Wirkstoffe (I) nicht vorteilhaft anwendbar, da sie zu Formulierungen mit unzureichender Lagerstabilität oder zu hochviskosen Formulierungen führen.

Allgemein geeignet zur Herstellung von konzentrierten wäßrigen Emulsionen sind phosphorylierte Tenside wie z.B. phosphorylierte Ethylenoxid-Propylenoxid-Blockpolymere sowie ethoxylierte und phosphorylierte styrylsubstituierte Phenole. Eine Verwendung dieser Emulgatoren auch in Kombination mit verschiedenen nicht phosphorylierten Tensiden, wie sie in DE-OS 33 46 637, DE-OS 33 04 677 und EP-A 0 257 286 beschrieben sind, führte bei den Verbindungen I nicht zum Erfolg: bei Lagertemperaturen zwischen 0°C und 25°C tritt Phasentrennung auf. Wird zur Verhinderung dieser Phasentrennung der prozentuale Anteil der Emulgatoren erhöht, so ist eine starke Erhöhung der Viskosität zu beobachten, die eine schlechte Gießfähigkeit zur Folge hat und teilweise bei Warmlagerung auch zu wachsartigen Verdickungen führt.

Es wurde nun überraschenderweise gefunden, daß bei Verwendung einer Kombination aus einem anionaktiven Emulgator, einem n-Butanol-Propylenoxid-Ethylenoxid-Block-oxalkylat und einem Natrium-Magnesium-(und/oder Aluminium)-Schichtsilikat die Verbindungen der Formel I zu wäßrigen Emulsionen formuliert werden können, die in einem breiten Temperaturbereich lagerstabil und gut gießfähig (geeignete Viskosität) sind. Darüberhinaus besitzen die erfindungsgemäßen wäßrigen Emulsionen die genannten umwelt- und anwenderfreundlichen Eigenschaften. Die Gesamtmenge an Emulgatoren kann außerordentlich niedrig gehalten werden, eine Verwendung von Lösungsmitteln ist nicht erforderlich, sodaß die Formulierung wenig umweltgefährdende Stoffe enthält.

Als anionaktive Emulgatoren können verwandt werden: Salze der Dodecylbenzolsulfonsäure, Salze der gegebenenfalls chlorierten (C₁₃-C₁₈)-Alkansulfonsäuren, ferner Emulgatoren aus der Gruppe der (C₁₀-C₁₆)-Alkylmono-bis-hexaglykol-ethersulfatsalze und der α-(C₁₄-C₁₉)-Alkenolsulfatsalze. Insbesondere ist es günstig, die Salze der Dodecylbenzolsulfonsäure einzusetzen. Der Begriff Salze steht für Alkali-, Erdalkali- oder Ammoniumsalze, bevorzugt für Na- oder Ca-Salze. Insbesondere bevorzugt ist das Ca-Salz der Dodecylbenzolsulfonsäure (Phenylsulfonat Ca, Firma Hoechst AG).

Das n-Butanol-Propylenoxid-Ethylenoxid-Blockoxalkylat kann zu 1 - 3 Gew.-% aus n-Butanol, zu 40 - 50 Gew.-% aus Propylenoxid und zu 50 - 60 Gew.-% aus Ethylenoxid bestehen. Bevorzugt besteht es aus 2 Gew.-% n-Butanol, 44 Gew.-% Propylenoxid und zu 54 Gew.-% aus Ethylenoxid (HOE S 3510, Firma Hoechst AG).

Bei dem verwendeten Schichtsilikat kann es sich um ein Natrium-Magnesium-Silikat, ein Natrium-Aluminium-Silikat oder um eine Mischform der beiden Silikate handeln.

Die Schichtsilikate können natürlichen Ursprungs sein oder aus einer synthetischen Herstellung stammen. Das Natrium-Ion kann teilweise durch Lithium ersetzt sein. Bevorzugt ist ein Natrium-Magnesium-Silikat synthetischen Ursprungs wie z.B. ^{(R)}Laponite RD (Laporte-Ind. Ltd., Großbritannien). Die obengenannten Schichtsilikate sind beispielsweise beschrieben in Ullmanns Encyklopädie der technischen Chemie, 4. Auflage, Band 21, S. 370.

Der Anteil des Emulgatorgemisches in der fertigen Formulierung beträgt bevorzugt 4 - 17 Gew.-%, inbesondere 5 - 14 Gew.-%. Der anionaktive Emulgator ist zu 1,5 - 7 Gew.-%, bevorzugt 1,9 - 5 Gew.-%, in den erfindungsgemäßen wäßrigen Emulsionen enthalten. Der Anteil des nichtionogenen Emulgators (Block-oxalkylat) beträgt 2,5 - 10 Gew.-%, insbesondere 3,1 - 9 Gew.-%. Das erfindungsgemäß zu verwendende Natrium-Magnesium- (und/oder Aluminium)-Schichtsilikat liegt zu 0,1 - 1,5 Gew.-%, bevorzugt 0,2 - 0,8 Gew.-% in der fertigen Formulierung vor, welche die Wirkstoffe der Formel I zu 0,5 - 80 Gew.-%, insbesondere 10 - 50 Gew.-% enthält.

Auch Mischungen aus mehreren Vertretern der drei genannten Emulgatortypen erfüllen den erfindungsgemäßen Zweck.

Bei Verwendung von hartem Wasser ist es vorteilhaft, Komplexbildner, wie z.B. Natriumpolyphosphat mittlerer Kettenlänge mit einem gesamt-P₂O₅-Gehalt von ca. 60 % oder Natriumtripolyphosphat in Anteilen von 0,05 bis 2 Gew.-% zuzusetzen.

Darüber hinaus können die erfindungsgemäßen Formulierungen noch weitere übliche Formulierungshilfsmittel enthalten. So z.B. als Frostschutzmittel:
ein- oder mehrwertige Alkohole, Glykolether oder Harnstoff, besonders Glycerin, Isopropanol, Propylenglykolmonomethylether, Di- oder Tripropylenglykolmonomethylether oder Cyclohexanol. Der Anteil dieser Frostschutzmittel liegt zwischen 0,2 und 20 Gew.-%.

Bei allen genannten Formulierungshilfsstoffen handelt es sich um dem Fachmann hinreichend bekannte Substanzen, die in der Literatur beschrieben sind (vgl. Winnacker-Küchler, "Chemische Technologie", Band 7, C. Hauser Verlag München, 4. Aufl. 1986; McCutcheon's "Detergents and Emulsifiers Annual" MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976).

Zur Herstellung der hier beschriebenen Formulierungen werden zunächst Wirkstoff und Emulgatoren solange bei 25 bis 45°C gerührt, bis eine Lösung entstanden ist. Hierfür sind in der Regel 1 bis 2 Stunden erforderlich. Man stellt dann eine Lösung des Schichtsilikates und des Polyphosphates in Wasser her. Unter Rühren wird diese wäßrige Lösung zu der Wirkstoff/Emulgator-Lösung getropft, anschließend wird noch 2 bis 5 Stunden bei 25 bis 30°C gerührt. Es werden so Emulsionen mit Teilchengrößen von 50 % <0,37 - 0,44 µm erhalten. Es kann auch umgekehrt vorgegangen werden, indem die wäßrige Lösung des Schichtsilikates und des Polyphosphates vorgelegt und die organische Lösung von Emulgatoren und Wirkstoff unter Rühren zugetropft wird. Es werden dieselben Rührzeiten und Temperaturen angewandt. hierbei erhält man Emulsionen mit Teilchengrößen von 50 % <0,35 - 0,40 µm.

Die Erfindung wird durch die nachfolgenden Herstellungsbeispiele erläutert:

### - Die Bestimmung der Teilchengröße wurde mit einem Malvern Masters Sizer MS2O^{(R)} (Firma Malvern) durchgeführt. -

Anteil in der fertigen
Formulierung
I.
   a)
      - 40,0 Gew.-%: einer Verbindung der Formel I
      - 2,5 Gew.-%: Dodecylbenzolsulfonsaures Calcium (Phenylsulfonat Ca, Hoechst AG)
      - 5,4 Gew.-%: n-Butanol-Propylenoxid-Ethylen-oxid-Block-oxalkylat (HOE S3510)
      werden 2 Stunden bei 40°C gerührt, bis eine Lösung entstanden ist.
      Dann werden
   b)
      - 0,1 Gew.-%: Natriumpolyphosphat mittlerer Kettenlänge mit einem P₂O₅-Gehalt von ca. 60 %
      - 0,4 Gew.-%: Natrium-Magnesium-Schichtsilikat in
      - 51,6 Gew.-%: Wasser gelöst.

      Hierfür ist eine Rührzeit von etwa 1 Stunde erforderlich.
      Unter Rühren wird nun die wäßrige Lösung b) zur organischen Phase a) getropft.
      Nach dem Zutropfen wird noch 3 Stunden bei 25 - 30°C gerührt.
      Es entsteht eine Emulsion mit einer Teilchengröße von 50 %<0,38 µm.
   II.
   a)
      - 38,0 Gew.-%: einer Verbindung der Formel I
      - 2,2 Gew.-%: Dodecylbenzolsulfonsaures Calcium
      - 5,2 Gew.-%: n-Butanol-Propylenoxid-Ethylenoxid-Block-oxalkylat
      werden 2 Stunden bei 40°C gerührt, bis eine Lösung entstanden ist. Diese organische Phase wird unter Rühren zu einer Lösung von
   b)
      - 0,1 Gew.-%: Natriumtripolyphosphat
      - 0,3 Gew.-%: Natrium-Magnesium-Schichtsilikat in
      - 54,2 Gew.-%: Wasser
      getropft. Danach wird noch 3 Stunden bei 25 - 30°C gerührt. Es entsteht eine Emulsion mit einer Teilchengröße von 50 %<0,36 µm.
   III.
   a)
      - 42,0 Gew.-%: einer Verbindung der Formel I
      - 2,8 Gew.-%: Chlor-(C₁₃-C₁₈)Alkansulfonsaures Calcium (1,2 - 1,6 Cl pro Mol Alkansulfonat)
      - 5,6 Gew.-%: n-Butanol-Propylenoxid Ethylenoxid-Block-oxalkylat
      werden 2 Stunden bei 35 - 40°C gerührt, bis eine Lösung entstanden ist.
      Dann werden
   b)
      - 0,1 Gew.-%: Natriumtripolyphosphat
      - 0,4 Gew.-%: Natrium-Magnesium-Schichtsilikat in
      - 49,1 Gew.-%: Wasser gelöst.

      Hierfür ist eine Rührzeit von etwa 1 Stunde erforderlich.
      Unter Rühren wird nun die wäßrige Lösung b) zur organischen Phase a) getropft.
      Nach dem Zutropfen wird noch 4 Stunden bei 25 - 30°C gerührt.
      Es entsteht eine Emulsion mit einer Teilchengröße von 50 %<0,41 µm.
   IV.
   a)
      - 20,0 Gew.-%: einer Verbindung der Formel I
      - 3,5 Gew.-%: Dodecylbenzolsulfonsaures Calcium
      - 8,5 Gew.-%: n-Butanol-Propylenoxid-Ethylenoxid-Block-oxalkylat
      werden 2,5 Stunden bei 40°C gerührt, bis eine Lösung entstanden ist.
      Dann werden
   b)
      - 0,13 Gew.-%: Natriumtripolyphosphat
      - 0,50 Gew.-%: Natrium-Magnesium-Schichtsilikat in
      - 67,37 Gew.-%: Wasser gelöst.

      Hierfür ist eine Rührzeit von etwa 1 Stunde erforderlich.

   Unter Rühren wird nun die wäßrige Lösung b) zur organischen Phase a) getropft.
   Nach dem Zutropfen wird noch 3 Stunden bei 25 - 30°C gerührt.
   Es entsteht eine Emulsion mit einer Teilchengröße von 50 % < 0,41 µm.

Die konzentrierten wäßrigen Emulsionen der Herstellungsbeispiele I - IV sind nach 3-monatiger Lagerung bei 20°C, 40°C und 50°C, nach 14-tägiger Lagerung bei 54°C und nach 14-tägiger Lagerung bei 0°C homogen, es wird keine Phasentrennung oder Abscheidung von Festkörpern beobachtet.

Vor und nach Lagerung entsprechen die konzentrierten wäßrigen Emulsionen der Beispiele I bis IV bei Verdünnung auf Anwendungskonzentration den internationalen Prüfbestimmungen; d.h. eine auf 5 % mit Wasser von 30°C und 342 ppm Härte (CIPAC-Standard-Wasser D¹⁾) verdünnte Emulsion hat nach 6 Stunden,Standzeit keine cremigen oder öligen Abscheidungen.
¹⁾ CIPAC-Handbook, Vol. 1, S. 878, Collaborative International Pesticides Analytical Council Ltd. (1970) s.a. Specifications for Pesticides used in public Health, World Health Organisation, Genf (1973).

Die Viskosität der konzentrierten wäßrigen Emulsionen nach den Herstellungsbeispielen I bis IV liegt bei niedriger Scherbeanspruchung von 16,8·sec⁻¹ bei 440-445 mPa·Sek. und bei hoher Scherbeanspruchung von 144·sec⁻¹ bei 110-115 mPa·Sek. gemessen mit Rheomat 115, Fa. Contraves.

Damit ist eine gute Gießfähigkeit der Formulierungen gewährleistet.

## Patentansprüche (Patentansprüche für folgende(n) Vertragsstaat(en): AT, BE, CH, DE, DK, FR, GB, GR, IT, LI, NL)

1. Konzentrierte wäßrige Emulsionen von Verbindungen der allgemeinen Formel I 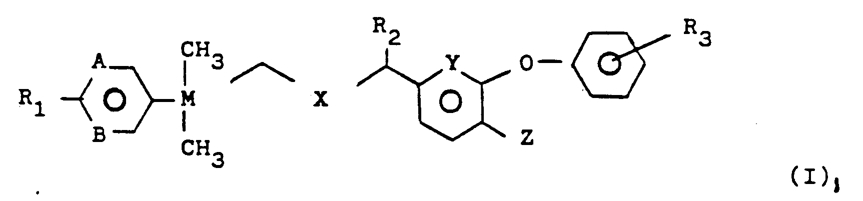 worin
A, B = unabhängig voneinander CH, CR₄, N
X = CH₂, O, S,
Y = CH, N,
Z = H, F,
R₁, R₄ = unabhängig voneinander H, Halogen, (C₁-C₃)-Alkyl,(C₁-C₃)-Halogenalkyl, (C₁-C₃)-Alkoxy, (C₁-C₃)-Halogenalkoxy, (C₁-C₄)-Alkylthio, (C₁-C₄)-Halogenalkylthio oder R₁ und R₄ zusammen = -CH₂-O-CH₂- ;
R₂ = H, (C₁-C₃)-Alkyl, Ethinyl, Vinyl, Halogen, Cyano,
R₃ = H, Halogen, (C₁-C₄)-Alkyl, (C₁-C₃)-Alkoxy und
M = C oder Si bedeuten, dadurch gekennzeichnet, daß diese eine Kombination aus einem anionaktiven Emulgator, einem n-Butanol-Propylenoxid-Ethylenoxid-Block-oxalkylat und einem Natrium-Magnesium-(und/oder Aluminium)-Silikat mit Schichtstruktur enthalten.

2. Konzentrierte wäßrige Emulsionen gemäß Anspruch 1, dadurch gekennzeichnet, daß in Formel I A, B = CH oder N, X = CH₂, R₁ = (C₁-C₃)-Alkoxy, R₂ = H, R₃ = H oder F und M = Si bedeuten.

3. Konzentrierte wäßrige Emulsionen gemäß Anspruch 1 oder 2, dadurch gekennzeichnet, daß in Formel I M = Si, R₁ = Ethoxy, A,B = CH, X = CH₂, R₂ = H, Y = CH, Z = F und R₃ = H bedeuten.

4. Konzentrierte wäßrige Emulsionen gemäß einem oder mehreren der Ansprüche 1 bis 3, dadurch gekennzeichnet, daß diese insgesamt 4 - 17 Gew.-% eines Emulgatorgemisches bestehend aus anionaktivem Emulgator, einem n-Butanol-Propylenoxid-Ethylenoxid-Block-oxalkylat und einem Natrium-Magnesium- (und/oder Aluminium)-Schichtsilikat enthalten.

5. Konzentrierte wäßrige Emulsionen gemäß einem oder meheren der Ansprüche 1 - 4, dadurch gekennzeichnet, daß diese 1,5 - 7 Gew.-% anionaktiver Emulgator, 2,5 - 10 Gew.-% eines n-Butanol-Propylenoxid-Ethylenoxid-Block-oxalkylats und 0,1 - 1,5 Gew.-% eines Natrium-Magnesium-(und/oder Aluminium)-Schichtsilikats enthalten.

6. Konzentrierte wäßrige Emulsionen gemäß einem oder mehreren der Ansprüche 1 - 5, dadurch gekennzeichnet, daß diese 1,9 - 5 Gew.-% anionaktiven Emulgator, 3,1 - 9 Gew.-% eines n-Butanol-Propylenoxid-Ethylenoxid-Block-oxalkylats und 0,2 - 0,8 Gew.-% eines Natrium-Magnesium-(und/oder Aluminium)-Schichtsilikats enthalten.

7. Konzentrierte wäßrige Emulsionen gemäß einem oder mehreren der Ansprüche 1 - 6, dadurch gekennzeichnet, daß das n-Butanol-Propylenoxid-Ethylenoxid-Block-oxalkylat zu 1 - 3 Gew.-% aus n-Butanol, zu 40 - 50 Gew.-% aus Propylenoxid und zu 50 - 60 Gew.-% aus Ethylenoxid besteht.

8. Konzentrierte wäßrige Emulsionen gemäß einem oder mehreren der Ansprüche 1 - 7, dadurch gekennzeichnet, daß als anionaktiver Emulgator ein Alkali- oder Erdalkalisalz der Dodecylbenzolsulfonsäure verwendet wird.

9. Verfahren zur Bekämpfung von Schadinsekten oder Akariden, dadurch gekennzeichnet, daß man auf diese oder die von diesen befallenen Pflanzen, Flächen oder Substrate eine wirksame Menge einer wäßrigen Emulsion gemäß einem oder mehreren der Ansprüche 1 - 8 appliziert.

10. Verwendung von wäßrigen Emulsionen gemäß einem oder mehreren der Ansprüche 1 - 8 zur Bekämpfung von Schadinsekten oder Akariden.

## Patentansprüche (Patentansprüche für folgende(n) Vertragsstaat(en): ES)

1. Verfahren zur Herstellung von konzentrierten wäßrigem Emulsionen von Verbindungen der allgemeinen Formel I 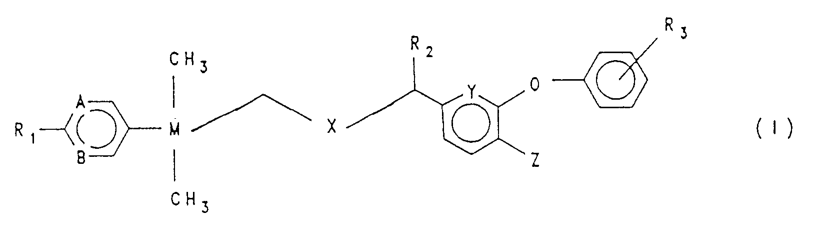 worin
A, B = unabhängig voneinander CH, CR₄, N
X = CH₂, O, S,
Y = CH, N,
Z = H, F,
R₁, R₄ = unabhängig voneinander H, Halogen, (C₁-C₃)-Alkyl, (C₁-C₃)-Halogenalkyl, (C₁-C₃)-Alkoxy, (C₁-C₃)-Halogenalkoxy, (C₁-C₄)-Alkylthio, (C₁-C₄)-Halogenalkylthio oder
R₁ und R₄ zusammen = -CH₂-O-CH₂- ;
R₂ = H, (C₁-C₃)-Alkyl, Ethinyl, Vinyl, Halogen, Cyano,
R₃ = H, Halogen, (C₁-C₄)-Alkyl, (C₁-C₃)-Alkoxy und
M = C oder Si bedeuten, dadurch gekennzeichnet, daß diese eine Kombination aus einem anionaktiven Emulgator, einem n-Butanol-Propylenoxid-Ethylenoxid-Blockoxalkylat und einem Natrium-Magnesium- (und/oder Aluminium)-Silikat mit Schichtstruktur enthalten,
dadurch gekennzeichnet, daß man Wirkstoff und Emulgatoren solange bei 25 bis 45°C rührt, bis eine Lösung entstanden ist, dann eine wäßrige Lösung der übrigen Bestandteile zutropft und anschließend 2 bis 5 Stunden bei 25 bis 30°C rührt, oder eine organische Lösung von Emulgatoren und Wirkstoff zu einer vorgelegten wäßrigen Lösung der übrigen Bestandteile unter Rühren zutropft und dabei dieselben Rührzeiten und Temperaturen anwendet.

2. Verfahren gemäß Anspruch 1, dadurch gekennzeichnet, daß in Formel (I) A, B = CH oder N, X = CH₂, R₁ = (C₁-C₃)-Alkoxy, R₂ = H, R₃ = H oder F und M = Si bedeuten.

3. Verfahren gemäß Anspruch 1 oder 2, dadurch gekennzeichnet, daß in Formel (I) M = Si, R₁ = Ethoxy, A, B = CH, X = CH₂, R₂ = H, Y = CH, Z = F und R₃ = H bedeuten.

4. Verfahren gemäß einem oder mehreren der Ansprüche 1 bis 3, dadurch gekennzeichnet, daß Emulsionen hergestellt werden, die insgesamt 4 - 17 Gew.-% eines Emulgatorgemisches, bestehend aus anionaktivem Emulgator, einem n-Butanol-Propylenoxid-Ethylencxid-Block-oxalkylat und einem Natrium-Magnesium- (und/oder Aluminium)-Schichtsilikat enthalten.

5. Verfahren gemäß einem oder mehreren der Ansprüche 1 - 4, dadurch gekennzeichnet, daß Emulsionen hergestellt werden, die 1,5 - 7 Gew.-% anionaktiver Emulgator, 2,5 - 10 Gew.-% eines n-Butanol-Propylenoxid-Ethylenoxid-Block-oxalkylats und 0,1 - 1,5 Gew.-% eines Natrium-Magnesium- (und/oder Aluminium)-Schichtsilikats enthalten.

6. Verfahren gemäß einem oder mehreren der Ansprüche 1 - 5, dadurch gekennzeichnet, daß Emulsionen hergestellt werden, die 1,9 - 5 Gew.-% anionaktiven Emulgator, 3,1 - 9 Gew.-% eines n-Butanol-Propylenoxid-Ethylenoxid-Block-oxalkylats und 0,2 - 0,8 Gew.-% eines Natrium-Magnesium- (und/oder Aluminium)-Schichtsilikats enthalten.

7. Verfahren gemäß einem oder mehreren der Ansprüche 1 - 6, dadurch gekennzeichnet, daß das n-Butanol-Propylenoxid-Ethylenoxid-Blockoxalkylat zu 1 - 3 Gew.-% aus n-Butanol, zu 40 - 50 Gew.-% aus Propylenoxid und zu 50 - 60 Gew.-% aus Ethylenoxid besteht.

8. Verfahren gemäß einem oder mehreren der Ansprüche 1 - 7, dadurch gekennzeichnet, daß als anionaktiver Emulgator ein Alkali- oder Erdalkalisalz der Dodecylbenzolsulfonsäure verwendet wird.

9. Verfahren zur Bekämpfung von Schadinsekten oder Akariden, dadurch gekennzeichnet, daß man auf diese oder die von diesen befallenen Pflanzen, Flächen oder Substrate eine wirksame Menge einer wie in einem oder mehreren der Ansprüche 1 - 8 definierten wäßrigen Emulsionen appliziert.

10. Verwendung von wie in einem oder mehreren der Ansprüche 1 - 8 definierten wäßrigen Emulsionen zur Bekämpfung von Schadinsekten oder Akariden.

## Claims (Claims for the following Contracting State(s): AT, BE, CH, DE, DK, FR, GB, GR, IT, LI, NL)

1. A concentrated aqueous emulsion of a compound of the formula I 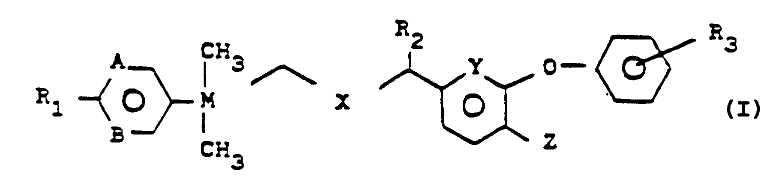 in which
A and B independently of one another are CH, CR₄ or N,
X is CH₂, O or S,
Y is CH or N,
Z is H or F,
R₁ and R₄ independently of one another are H, halogen, (C₁-C₃)-alkyl, (C₁-C₃)-haloalkyl, (C₁-C₃)-alkoxy, (C₁-C₃)-haloalkoxy, (C₁-C₄)-alkylthio or (C₁-C₄)-haloalkylthio, or R₁ and R₄ together are -CH₂-O-CH₂-;
R₂ is H, (C₁-C₃)-alkyl, ethynyl, vinyl, halogen or cyano,
R₃ is H, halogen, (C₁-C₄)-alkyl or (C₁-C₃)-alkoxy and
M is C or Si, which contains a combination of an anionic emulsifier, an n-butanol/propylene oxide/ethylene oxide block oxalkylate and a sodium magnesium (and/or aluminum) silicate having a layered structure.

2. A concentrated aqueous emulsion as claimed in claim 1, in which, in formula I, A and B are CH or N, X is CH₂, R₁ is (C₁-C₃)-alkoxy, R₂ is H, R₃ is H or F and M is Si.

3. A concentrated aqueous emulsion as claimed in claim 1 or 2, in which, in formula I, M is Si, R₁ is ethoxy, A and B are CH, X is CH₂, R₂ is H, Y is CH, Z is F and R₃ is H.

4. A concentrated aqueous emulsion as claimed in one or more of claims 1 to 3, which contains, in total, 4-17% by weight of an emulsifier mixture consisting of anionic emulsifier, an n-butanol/propylene oxide/ethylene oxide block oxalkylate and a sodium magnesium (and/or aluminum) layered silicate.

5. A concentrated aqueous emulsion as claimed in one or more of claims 1-4, which contains 1.5-7% by weight of anionic emulsifier, 2.5-10% by weight of an n-butanol/propylene oxide/ethylene oxide block oxalkylate and 0.1-1.5% by weight of a sodium magnesium (and/or aluminum) layered silicate.

6. A concentrated aqueous emulsion as claimed in one or more of claims 1-5, which contains 1.9-5% by weight of anionic emulsifier, 3.1-9% by weight of an n-butanol/propylene oxide/ethylene oxide block oxalkylate and 0.2-0.8% by weight of a sodium magnesium (and/or aluminum) layered silicate.

7. A concentrated aqueous emulsion as claimed in one or more of claims 1-6, in which the n-butanol/propylene oxide/ethylene oxide block oxalkylate consists to 1-3% by weight of n-butanol, to 40-50% by weight of propylene oxide and to 50-60% by weight of ethylene oxide.

8. A concentrated aqueous emulsion as claimed in one or more of claims 1-7, in which an alkali metal salt or alkaline earth metal salt of dodecylbenzenesulfonic acid is used as the anionic emulsifier.

9. A method of controlling harmful insects or acarids, in which an effective amount of an aqueous emulsion as claimed in one or more of claims 1-8 is applied to these harmful insects or acarids or to plants, areas or substrates infested with them.

10. The use of an aqueous emulsion as claimed in one or more of claims 1-8 for controlling harmful insects or acarids.

## Claims (Claims for the following Contracting State(s): ES)

1. A process for preparing a concentrated aqueous emulsion of a compound of the formula I 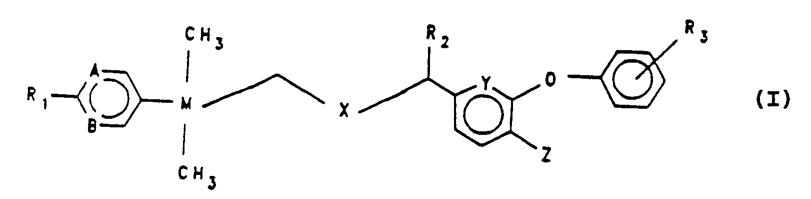 in which
A and B independently of one another are CH, CR₄ or N,
X is CH₂, O or S,
Y is CH or N,
Z is H or F,
R₁ and R₄ independently of one another are H, halogen, (C₁-C₃)-alkyl, (C₁-C₃)-haloalkyl, (C₁-C₃)-alkoxy, (C₁-C₃)-haloalkoxy, (C₁-C₄)-alkylthio or (C₁-C₄)-haloalkylthio, or R₁ and R₄ together are -CH₂-O-CH₂-;
R₂ is H, (C₁-C₃)-alkyl, ethynyl, vinyl, halogen or cyano,
R₃ is H, halogen, (C₁-C₄)-alkyl or (C₁-C₃)-alkoxy and
M is C or Si, which contains a combination of an anionic emulsifier, an n-butanol/propylene oxide/ethylene oxide block oxalkylate and a sodium magnesium (and/or aluminum) silicate having a layered structure, which comprises stirring active substance and emulsifiers at 25 to 45°C until a solution has formed, then adding dropwise an aqueous solution of the remaining constituents and then stirring for 2 to 5 hours at 25 to 30°C, or adding dropwise an organic solution of emulsifiers and active substance with stirring to an initially introduced aqueous solution of the remaining constituents, employing the same stirring times and temperatures.

2. The process as claimed in claim 1, in which, in formula I, A and B are CH or N, X is CH₂, R₁ is (C₁-C₃)-alkoxy, R₂ is H, R₃ is H or F and M is Si.

3. The process as claimed in claim 1 or 2, in which, in formula I, M is Si, R₁ is ethoxy, A and B are CH, X is CH₂, R₂ is H, Y is CH, Z is F and R₃ is H.

4. The process as claimed in one or more of claims 1 to 3, which comprises preparing an emulsion which contains, in total, 4-17% by weight of an emulsifier mixture consisting of anionic emulsifier, an n-butanol/propylene oxide/ethylene oxide block oxalkylate and a sodium magnesium (and/or aluminum) layered silicate.

5. The process as claimed in one or more of claims 1-4, which comprises preparing an emulsion which contains 1.5-7% by weight of anionic emulsifier, 2.5-10% by weight of an n-butanol/propylene oxide/ethylene oxide block oxalkylate and 0.1-1.5% by weight of a sodium magnesium (and/or aluminum) layered silicate.

6. The process as claimed in one or more of claims 1-5, which comprises preparing an emulsion which contains 1.9-5% by weight of anionic emulsifier, 3.1-9% by weight of an n-butanol/propylene oxide/ethylene oxide block oxalkylate and 0.2-0.8% by weight of a sodium magnesium (and/or aluminum) layered silicate.

7. The process as claimed in one or more of claims 1-6, in which the n-butanol/propylene oxide/ethylene oxide block oxalkylate consists to 1-3% by weight of n-butanol, to 40-50% by weight of propylene oxide and to 50-60% by weight of ethylene oxide.

8. The process as claimed in one or more of claims 1-7, in which an alkali metal salt or alkaline earth metal salt of dodecylbenzenesulfonic acid is used as the anionic emulsifier.

9. A method of controlling harmful insects or acarids, in which an effective amount of an aqueous emulsion as defined in one or more of claims 1-8 is applied to these harmful insects or acarids or to plants, areas or substrates infested with them.

10. The use of an aqueous emulsion as defined in one or more of claims 1-8 for controlling harmful insects or acarids.

## Revendications (Revendications pour l'(les) Etat(s) contractant(s) suivant(s): AT, BE, CH, DE, DK, FR, GB, GR, IT, LI, NL)

1. Emulsions aqueuses concentrées de composés de formule générale I 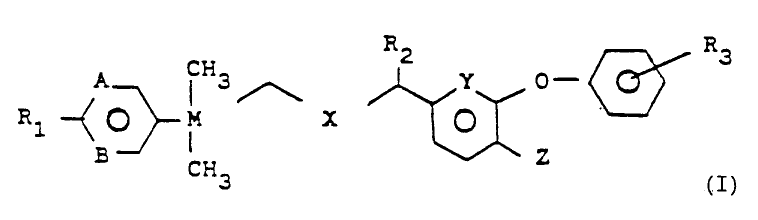 dans laquelle
A, B = indépendamment l'un de l'autre CH, CR₄, N,
X = CH₂, O, S,
Y = CH, N,
Z = H, F,
R₁, R₄ = indépendamment l'un de l'autre H, halogène, alkyle (C₁-C₃), halogéno-alkyle (C₁-C₃), alcoxy (C₁-C₃), halogéno-alcoxy (C₁-C₃), alkylthio (C₁-C₄), halogéno-alkylthio (C₁-C₄) ou R₁ et R₂ ensemble = -CH₂-O-CH₂- ;
R2 = H, les alkyles en C₁-C₃, éthynyle, vinyle, halogène, cyano,
R3 = H, les halogènes, alkyles en C₁-C₄, alcoxy en C₁-C₃ et
M = C ou Si, caractérisées en ce qu'elles contiennent une combinaison d'un émulsifiant à activité anionique, d'un alcoxylate de n-butanol-oxyde de propylèneoxyde d'éthylène séquencé et d'un silicate de sodiummagnésium (et/ou aluminium) à structure stratifiée.

2. Emulsions aqueuses concentrées selon la revendication 1, caractérisées en ce que dans la formule I A, B = CH ou N, X = CH₂, R₁ = alcoxy (C₁-C₃), R₂ = H, R₃ = H ou F et M = Si.

3. Emulsions aqueuses concentrées selon la revendication 1 ou 2, caractérisées en ce que dans la formule I M = Si, R₁ = éthoxy, A, B = CH, X = CH₂, R₂ = H, Y = CH, Z = F et R₃ = H.

4. Emulsions aqueuses concentrées selon une ou plusieurs des revendications 1 à 3, caractérisées en ce qu'elles contiennent au total de 4 à 17 % en poids d'un mélange d'émulsifiants composé d'un émulsifiant à activité anionique, d'un alcoxylate de n-butanol-oxyde de propylèneoxyde d'éthylène séquencé et d'un silicate de sodiummagnésium (et/ou d'aluminium) à structure stratifiée.

5. Emulsions aqueuses concentrées selon une ou plusieurs des revendications 1 à 4, caractérisées en ce qu'elles contiennent de 1,5 à 7 % en poids d'émulsifiants à activité anionique, de 2,5 à 10 % en poids d'un alcoxylate de n-butanol-oxyde de propylène-oxyde d'éthylène séquencé et de 0,1 à 1,5 % en poids d'un silicate de sodium-magnésium (et/ou d'aluminium) à structure stratifiée.

6. Emulsions aqueuses concentrées selon une ou plusieurs des revendications 1 à 5, caractérisées en ce qu'elles contiennent de 1,9 à 5 % en poids d'émulsifiants à activité anionique, de 3,1 à 9 % en poids d'un alcoxylate de n-butanol-oxyde de propylène-oxyde d'éthylène séquencé et de 0,2 à 0,8 % en poids d'un silicate de sodium-magnésium (et/ou d'aluminium) à structure stratifiée.

7. Emulsions aqueuses concentrées selon une ou plusieurs des revendications 1 à 6, caractérisées en ce que l'alcoxylate de n-butanol-oxyde de propylène-oxyde d'éthylène séquencé se compose de 1 à 3 % en poids de n-butanol, de 40 à 50 % en poids d'oxyde de propylène et de 50 à 60 % en poids d'oxyde d'éthylène.

8. Emulsions aqueuses concentrées selon une ou plusieurs des revendications 1 à 7, caractérisées en ce qu'on utilise en tant qu'émulsifiants à activité anionique un sel de métal alcalin ou de métaux alcalino-terreux d'acide dodécyl-benzène-sulfonique.

9. Procédé pour la lutte contre les insectes nuisibles ou les acariens, caractérisé en ce qu'on applique sur ceux-ci ou sur les plantes, surfaces ou substrats attaqués par ceux-ci, une quantité efficace d'une émulsion aqueuse selon une ou plusieurs des revendications 1 à 8.

10. Utilisation d'émulsions aqueuses selon une ou plusieurs des revendications 1 à 8, pour la lutte contre les insectes nuisibles ou les acariens.

## Revendications (Revendications pour l'(les) Etat(s) contractant(s) suivant(s): ES)

1. Procédé pour la préparation d'émulsions aqueuses concentrées de composés de formule générale I 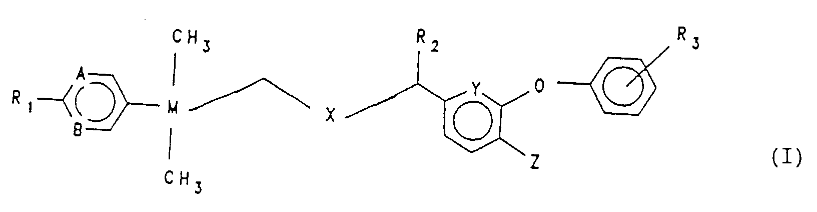 dans laquelle
A, B = indépendamment l'un de l'autre CH, CR₄, N,
X = CH₂, O, S,
Y = CH, N,
Z = H, F,
R₁, R₄ = indépendamment l'un de l'autre H, halogène, alkyle (C₁-C₃), halogéno-alkyle (C₁-C₃), alcoxy (C₁-C₃), halogéno-alcoxy (C₁-C₃), alkylthio (C₁-C₄), halogéno-alkylthio (C₁-C₄) ou
R₁ et R₂ ensemble = -CH₂-O-CH₂- ;
R2 = H, les alkyles (C₁-C₃), éthynyle, vinyle, halogène, cyano,
R3 = H, les halogènes, alkyles (C₁-C₄), alcoxy (C₁-C₃) et
M = C ou Si, lesdites émulsions contenant une combinaison d'un émulsifiant à activité anionique d'un alcoxylate de n-butanol-oxyde de propylène-oxyde d'éthylène séquencé et d'un silicate de sodium-magnésium (et/ou aluminium) à structure stratifiée,
caractérisé
en ce qu'on agite la matière active et les émulsifiants à une température de 25 à 45°C jusqu'à ce qu'il se forme une solution, puis on ajoute goutte-à-goutte une solution aqueuse des autres composants et ensuite, on agite pendant une durée de 2 à 5 heures, à 25 à 30°C, ou on ajoute goutte-à-goutte une solution organique d'émulsifiants et de matières actives à une solution aqueuse déjà présente des autres composants, sous agitation, et pour effectuer cette opération, on utilise les mêmes durées d'agitation et les mêmes températures.

2. Procédé selon la revendication 1, caractérisé en ce que dans la formule I les symboles signifient A, B = CH ou N, X = CH₂, R₁ = alcoxy (C₁-C₃), R₂ = H, R₃ = H ou F, et M = Si.

3. Procédé selon la revendication 1 ou 2, caractérisé en ce que dans la formule (I) les symboles signifient : M = Si, R₁ = éthoxy, A, B = CH, X = CH₂₃, R₂ = H, Y = CH, Z = F et R₃ = H.

4. Procédé selon une ou plusieurs des revendications 1 à 3, caractérisé en ce qu'on prépare des émulsions qui contiennent au total de 4 à 17 % en poids d'un mélange d'émulsifiants, composé d'un émulsifiant à activité anionique, d'un alcoxylate de n-butanol-oxyde de propylène-oxyde d'éthylène séquencé et d'un silicate à structure stratifiée de sodium-magnésium (et/ou d'aluminium).

5. Procédé selon une ou plusieurs des revendications 1 à 4, caractérisé en ce qu'on prépare des émulsions qui contiennent de 1,5 à 7 % en poids d'émulsifiant à activité anionique, de 2,5 à 10 % en poids d'un alcoxylate de n-butanol-oxyde de propylène-oxyde d'éthylène séquencé et de 0,1 à 1,5 % en poids d'un silicate à structure stratifiée de sodium-magnésium (et/ou d'aluminium).

6. Procédé selon une ou plusieurs des revendications 1 à 5, caractérisé en ce qu'on prépare des émulsions qui contiennent de 1,9 à 5 % en poids d'émulsifiants à activité anionique, de 3,1 à 9 % en poids d'un alcoxylate de n-butanol-oxyde de propylène-oxyde d'éthylène séquencé et de 0,2 à 0,8 % en poids d'un silicate à structure stratifiée de sodium-magnésium (et/ou d'aluminium).

7. Procédé selon une ou plusieurs des revendications 1 à 6, caractérisé en ce que l'alcoxylate de n-butanol-oxyde de propylène-oxyde d'éthylène séquencé se compose de 1 à 3 % en poids de n-butanol, de 40 à 50 % en poids d'oxyde de propylène et de 50 à 60 % en poids d'oxyde d'éthylène.

8. Procédé selon une ou plusieurs des revendications 1 à 7, caractérisé en ce qu'on utilise en tant qu'émulsifiant à activité anionique un sel de métal alcalin ou de métaux alcalino-terreux d'acide dodécylbenzène-sulfonique.

9. Procédé pour la lutte contre les insectes nuisibles ou les acariens, caractérisé en ce qu'on applique sur ceux-ci ou sur les plantes, surfaces ou substrats attaqués par ceux-ci une quantité efficace d'une émulsion aqueuse telle que définie dans une ou plusieurs des revendications 1 à 8.

10. Utilisation d'émulsions aqueuses définies dans une ou plusieurs des revendications 1 à 8, pour lutter contre les insectes nuisibles ou les acariens.
